# EUROPÄISCHE PATENTSCHRIFT

(11) **EP 2 032 393 B1**
(45) Veröffentlichungstag und Bekanntmachung des Hinweises auf die Patenterteilung: **16.12.2009**
(21) Anmeldenummer: 07725960.4
(22) Anmeldetag: 12.06.2007
(51) Int. Cl.: B60R 13/08

(54) **STRUKTURBAUTEIL, INSBESONDERE HITZESCHILD**
STRUCTURED COMPONENT, IN PARTICULAR HEAT SHIELD
COMPOSANT STRUCTURÉ, NOTAMMENT ÉCRAN THERMIQUE

(30) Priorität: 24.06.2006 DE 102006029086
(43) Veröffentlichungstag der Anmeldung: 11.03.2009
(73) Patentinhaber: ErlingKlinger AG, 72581 Dettingen/Erms (DE)
(72) Erfinder: MALINEK, Bruno, 90579 Langenzenn (DE)
(74) Vertreter: Bartels, Martin Erich Arthur
(86) Internationale Anmeldenummer: PCT/EP2007/005147
(87) Internationale Veröffentlichungsnummer: WO 2007/147499

(56) Entgegenhaltungen:
- EP-A2- 1 243 781
- DE-A1- 4 412 427
- DE-C1- 19 723 943
- DE-U1- 9 211 921

## Beschreibung

Die Erfindung bezieht sich auf ein Strukturbauteil, insbesondere Hitzeschild, bestehend aus mindestens zwei Lagen, die miteinander verbindbar sind und von denen eine als Decklage und zumindest eine als Strukturlage ausgebildet sind, wobei die zumindest eine Strukturlage als erste Struktur eine Perforation aufweist, die von der zu der Decklage entgegengesetzten Seite der Strukturlage her eingebracht ist, wobei in der die Perforation aufweisenden Strukturlage mindestens eine weitere Struktur angeordnet ist, die auf der zu der Decklage entgegengesetzten Seite vorsteht.

Strukturbauteile vergleichbarer Art sind in unterschiedlichen Ausführungsformen bekannt und finden insbesondere in der Kraftfahrzeugtechnik weit verbreitete Anwendung. Als Hitzeschild haben solche Strukturbauteile die Aufgabe, die von abgasführenden Teilen von Verbrennungsmotoren, Turboladern oder insbesondere Katalysatoren, durch Strahlung und/oder Konvektion abgegebene Wärme von benachbarten Baukomponenten oder Karosserieteilen abzuhalten. Da die in Frage kommenden, abzuschirmenden Teile nicht nur Wärmequellen sondern auch Schallquellen sind, ist neben der Wärmedämmung auch ein günstiges akustisches Abschirmverhalten äußerst wichtig.

Die bekannten Strukturbauteile werden diesen Anforderungen häufig nicht in ausreichendem Maße gerecht. Um ein ausreichend gutes akustisches Abschirmverhalten zu erzielen, befindet sich bei den bekannten Strukturbauteilen der vorstehend genannten Art in der der Wärme- und Schallquelle zugewandten Strukturlage eine Perforation (vgl. DE 40 35 177 A1), wobei die Lochdurchmesser, um eine Durchlässigkeit von Schallwellen durch die Strukturlage zu erreichen, entsprechend den interessierenden Wellenlängen gewählt sind. Wie sich gezeigt hat, läßt sich auch mit Hilfe derartiger Maßnahmen kein zufriedenstellendes akustisches Abschirmverhalten erreichen. Man ist deshalb gezwungen, wie dies in DE 40 35 177 A1 aufgezeigt ist, mehrere Strukturlagen mit akustisch wirksamen Strukturen zu versehen. Dies führt zu einem aufwändigen Sandwich-Aufbau, bei dem Strukturlagen durch Schweißen, Nieten oder Schrauben miteinander verbunden sind.

Durch die EP 0 806 555 A1 ist ein Hitzeschild, insbesondere zur Abschirmung abgasführender Teile in Kraftfahrzeugen, bekannt mit mindestens einer zwischen zwei Decklagen angeordneten metallischen Dämmlage, wobei die mindestens eine Dämmlage von einem mittels einer Vielzahl von Durchstoßungen strukturierten Blechteil oder einer Folie gebildet ist, und wobei der Grat der Durchstoßungen geschlitzt, zackenförmig oder zungenförmig ist. Die genannten Gratteile bewirken dabei lediglich bei der bekannten Lösung punktförmige Wärmekontakte zu benachbarten Lagen bzw. zu den vorzugsweise ebenfalls aus Metall bestehenden Decklagen. Sofern die Grate vorteilhafterweise nach außen umgebogen sind, bewirken diese eine punktuelle Verdoppelung der Materialstärke des Blechteils oder der Folie.

Durch die gattungsbildende DE 197 23 943 C1 ist ebenfalls ein Hitzeschild bekannt mit einer zwischen zwei Blechdecklagen mittig angeordneten Dämmlage in Form eines Zackenbleches mit Durchstoßungen in der Art einer Perforation nach beiden Richtungen, also zu der jeweiligen Decklage hin orientiert. In Fortbildung zu der vorstehend beschriebenen Lösung wird ein Teil der durch die Perforation entstehenden Zackengrate zur Verbindung der beiden Deckblechlagen miteinander verwendet, wohingegen die weiteren Grat- oder Zackenteile sich mit einem vorgesehen Abstand zwischen den beiden Decklagen eingriffsfrei zu diesen erstrecken. Dergestalt entstehen innerhalb eines Abschirmteiles kleinere Bereiche mit der genannten Zackenverbindung und größere Abschirmbereiche ohne einen dahingehenden Eingriff. Was ein zufriedenstellendes akkustisches Abschirmverhalten anbelangt, lassen diese bekannten Lösungen gleichfalls noch Wünsche offen.

Im Hinblick auf diesen Stand der Technik stellt sich die Erfindung die Aufgabe, ein Strukturbauteil zu schaffen, das trotz einfacher Bauweise eine kostengünstige Herstellung ermöglicht und neben einer guten, wärmedämmenden Wirkung auch eine sehr wirksame Schalldämmung ermöglicht.

Erfindungsgemäß ist diese Aufgabe durch ein Strukturbauteil gelöst, das die Merkmale des Patentanspruches 1 in seiner Gesamtheit aufweist.

Dadurch, dass gemäß dem kennzeichnenden Teil des Patentanspruches 1 die Perforation als erste Struktur der Strukturlage in die Umgebung mündet und dass die weitere Struktur der Strukturlage an jeder Stelle eingriffsfrei von der Decklage übergriffen ist, ergibt sich für einen Durchschnittsfachmann auf diesem Gebiet in überraschender Weise, gegenüber den bekannten Lösungen mit einem zwischen zwei Blechdecklagen angeordneten Zakkenblech, eine sehr wirksame Schalleindämmung bei sehr guter wärmedämmender Wirkung. Die erfindungsgemäße Lösung bildet aufgrund der unterschiedlich orientierten Perforationen zusammen mit der auf Abstand gehaltenen Decklage eine Art Resonanzboden aus, bei dem die nach innen zur Decklage hin gerichtete Perforation als erste Struktur als Aufnahmetrichter die Schallwellen einspeist und mit entsprechender Brechung und insoweit gedämmt über die weitere Struktur als Abgabetrichter in Richtung der Schallquelle an die Umgebung zurückwirft. Die über eine Wärmequelle eingebrachte Wärmestrahlung wird entsprechend über die gegenläufig wirkenden Trichter entsprechend reflektiert..

Bei einer bevorzugten Ausführungsform des erfindungsgemäßen Strukturbauteils ist vorgesehen, dass zumindest teilweise zwischen zwei benachbarten weiteren Strukturen sich vorstehende Wandabschnitte in der Art von rippenartig ausgewölbten Flächenabschnitten erstrecken. Derart entstehen Wellenberge mit geradliniger Gipfellinie, die als Versteifungselemente der gesamten Strukturlage dienen und die im übrigen bei Vibrationsbelastungen schwingungsdämpfend das gesamte Abschirmteil dergestalt aussteifen. Vorteilhafterweise ist dabei ferner vorgesehen, dass die jeweiligen Flächenabschnitte mit gleicher Wölbungshöhe die weiteren Strukturen auf ihrer Oberseite tragen.

Bei einer weiteren, besonders bevorzugten Ausführungsform des erfindungsgemäßen Strukturbauteils bilden die jeweiligen Flächenabschnitte ein regelmäßiges, vorzugsweise quadratisches Aussteifungsmuster, wobei der jeweilige Eckpunkt aus einer weiteren Struktur gebildet ist und wobei zumindest teilweise jedes Quadrat die erste Struktur umfaßt. Dergestalt sind nach außen hin sich erweiternde Trichter gebildet, die in Richtung der Decklage über die jeweils erste Struktur ausmünden, was den bereits beschriebenen Trichtereinfangeffekt verstärkt, so dass neben einer verbesserten Aussteifung des Gesamtschildsystems sowohl die Schall- als auch die Wärmeabschirmung verbessert ist.

Vorzugsweise ist die weitere Struktur aus jeweils einer Vertiefung gebildet. Dabei kann die Anordnung so getroffen sein, dass die Vertiefung ein geschlossenes Bodenteil oder dass, was im Hinblick auf das akustische Abschirmverhalten besonders vorteilhaft ist, die Vertiefung, vergleichbar der ersten Struktur, aus einer zweiten Perforation gebildet ist.

Vorzugsweise ist die zweite Perforation von der der Decklage zugewandten Seite her eingebracht, so dass die zweite Perforation mit ihren über die Ebene der Strukturlage vorstehenden Wandteilen die jeweilige Vertiefung bildet. Dieses gilt auch für die erste Perforation, die von der der Decklage entgegengesetzten Seite her eingebracht ist, so dass auch hier die über die Ebene der Strukturlage vorstehenden Wandteile eine jeweiligen Vertiefung bilden, die auf der der Decklage zugewandten Seite aus der Ebene der Strukturlage vorsteht.

Die Anordnung kann so getroffen sein, dass erste und zweite Perforation in einem Muster angeordnet sind, bei dem entlang gerader Linien, welche zueinander im rechten Winkel stehen, erste Perforation und zweite Perforation miteinander abwechselnd und mit jeweils gleichen Abständen voneinander angeordnet sind.

Bei in gleichmäßigen Abständen voneinander angeordneten Perforationen können die rippenartigen Flächenabschnitte quadratische Flächenbereiche an der Strukturlage umgrenzen.

Bei Ausführungsbeispielen, bei denen die Strukturlage als weitere Struktur eine großflächige wellenartige Wölbung besitzt, läßt sich bei geeigneter Wahl der Formgebung der Wölbung in Anpassung an die in Frage kommenden Schallwellen eine weitere Verbesserung der akustischen Dämmwirkung erreichen.

Mit sehr geringem Herstellungsaufwand ist ein sicherer Verbund zwischen Decklage und Strukturlage möglich, wenn die Decklage eine randseitige Umbördelung der Strukturlage bildet.

Bei besonders vorteilhaften Ausführungsbeispielen, bei denen zwischen der metallischen Decklage und der metallischen Strukturlage eine Dämm- oder Isolierlage angeordnet ist, ergibt sich eine besonders gute thermische und akustische Dämmwirkung.

Nachstehend ist die Erfindung anhand der Zeichnung im Einzelnen erläutert. Es zeigen:
- Fig. 1 eine diagrammartig vereinfachte Darstellung lediglich eines Längenabschnittes der Strukturlage eines Ausführungsbeispieles des erfindungsgemäßen Strukturbauteiles, wobei eine erste Struktur und eine zweite Struktur an der Strukturlage zur Verdeutlichung des Grundprinzips der Erfindung übertrieben groß dargestellt sind;
- Fig. 2 bis 4 der Fig. 1 ähnliche diagrammartige Darstellungen zur Verdeutlichung eines zweiten (Fig. 2) und eines dritten (Fig. 3 und 4) Ausführungsbeispieles der Erfindung;
- Fig. 5 eine abgebrochen gezeichnete Teildraufsicht, gesehen auf die von der Decklage abgewandte Seite des dritten Ausführungsbeispieles, das gegenüber einer praktischen Ausführungsform in etwa sechsfacher Vergrößerung dargestellt ist;
- Fig. 6 eine Schnittdarstellung entsprechend der Schnittlinie VI-VI von Fig. 5 und
- Fig. 7 eine der Fig. 6 ähnliche Schnittdarstellung eines weiteren Ausführungsbeispieles der Erfindung.

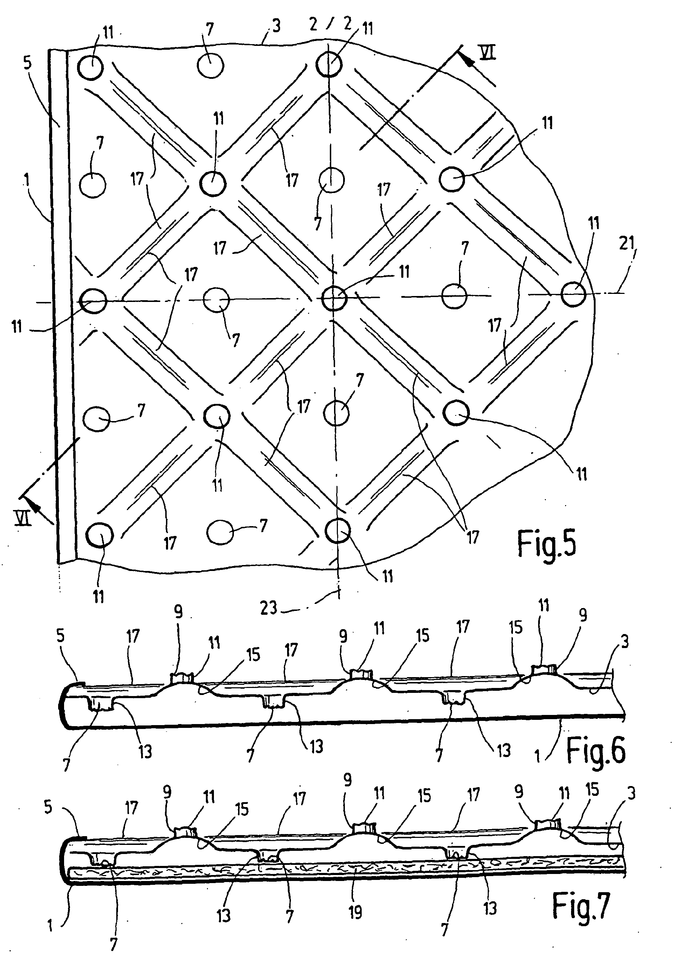

Sämtliche der in den Fig. dargestellten Ausführungsbeispiele der Erfindung bestehen aus einer Decklage 1, die lediglich in den Fig. 5 bis 7 teilweise sichtbar ist, sowie aus einer Strukturlage, die in sämtlichen Figuren, ungeachtet dessen, dass sie bei den einzelnen Ausführungsbeispielen unterschiedlich gestaltet ist, mit der Bezugszahl 3 bezeichnet ist. Die Decklage 1 ist frei von Durchbrüchen und feineren Strukturierungen, abgesehen von gegebenenfalls vorhandenen Befestigungslöchern für Anbauteile, und kann im großen Ganzen ebenflächig oder mit Krümmungen versehen sein. Die Decklage 1 ist aus einem Edelstahlblech einstückig hergestellt und in ihren Abmessungen und ihrem Umriß an die abzuschirmende Baukomponente angepaßt. Die Strukturlage 3 ist ebenfalls aus einem Edelstahlblech einteilig geformt und zur Bildung der nachstehend erläuterten Strukturen entsprechend verformt, wobei der Umriß der Strukturlage 3 dem Umriß der Decklage 1 so angepaßt ist, dass, wenn Strukturlage 3 und Decklage 1 aneinander gelegt sind, letztere mit einem Bördelrand 5 über den Rand der Strukturlage 3 übersteht und durch Umlegen des Bördelrandes 5, siehe insbesondere Fig. 6 und 7, die Lagen 1 und 3 miteinander verbunden sind.

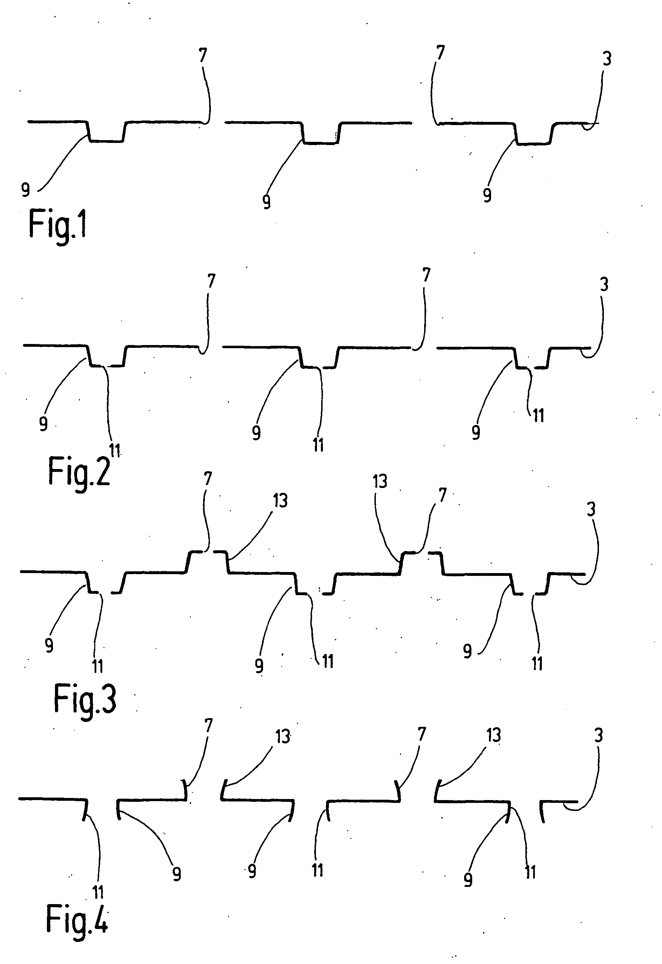

Fig. 1 zeigt die Ausbildung der Strukturlage 3 bei einem ersten Ausführungsbeispiel. In Fig. 1, ebenso wie in Fig. 2 bis 4, ist die Strukturlage 3 in einer Orientierung dargestellt, bei der die in der Zeichnung oben liegende Seite der nicht dargestellten Decklage 1 zugewandt ist und die in den Fig. 1 bis 4 unten liegende Seite der Strukturlage 3 der Schall- und Wärmequelle (nicht dargestellt) zugewandt ist. Bei dem Beispiel von Fig. 1 weist die Strukturlage 3 als erste Struktur eine Perforation auf, von der in der Fig. lediglich Perforationslöcher 7 gezeigt sind. Die diese Perforation bildenden Löcher 7 sind von der zu der Decklage 1 entgegengesetzten Seite her, also von der der Schall- und Wärmequelle zugewandten Seite her, in die Strukturlage 3 eingestochen. Als weitere Struktur weist die Strukturlage 3 des Ausführungsbeispieles von Fig. 1 eine jeweilige Vertiefung 9 auf, wobei diese Vertiefungen 9 von der der Decklage 1 zugewandten Seite her eingedrückt sind, so dass die Vertiefungen 9 auf der zu der Decklage 1 entgegengesetzten Seite der Strukturlage 3 vorstehen.

Das in Fig. 2 gezeigte Ausführungsbeispiel unterscheidet sich vom erstbeschriebenen Beispiel dadurch, dass die Strukturlage 3 nicht nur die die Perforationslöcher 7 und die Vertiefungen 9 aufweist, die auf der der Decklage 1 entgegengesetzten Seite vorstehen, sondern dass die Vertiefungen 9 kein geschlossenes Bodenteil aufweisen, sondern mit Löchern 11 im Bodenteil eine zweite Perforation bilden. Bei der Herstellung ist die die Löcher 11 aufweisende zweite Perforation in der Weise gebildet, dass die Strukturlage 3 von der in der Zeichnung oben liegenden Seite her durchstochen wird, wodurch gleichzeitig die Vertiefungen 9 und deren Lochung (Löcher 11) hergestellt wird.

Fig. 3 verdeutlicht eine Variante des Beispieles von Fig. 2, wobei gezeigt ist, dass bei der Herstellung nicht nur die Vertiefungen 9 als Elemente der zweiten Perforation mit Perforationslöchern 11 durch Einstechen von oben her erzeugt sind, sondern dass auch die Löcher 7 der ersten Perforation durch Einstechen, in diesem Falle von der der Schall- und Wärmequelle zugewandten Seite her, in der Weise erzeugt sind, dass dabei Vertiefungen 13, die gegen die Decklage 1 hin vorstehen, gebildet werden.

Fig. 4 verdeutlicht, weniger diagrammartig vereinfacht als bei den vorausgegangen Fig., die Formgebung, die sich durch das Durchstoßen der Strukturlage 3 von der einen Seite und von der anderen Seite her ergibt, dass nämlich bei der Bildung der ersten Perforation mit den Löchern 7 und der zweiten Perforation mit den Löchern 11 die beim Durchstoßen verformten Wandteile von erster und zweiter Perforation die Vertiefungen 13 und 9 bilden, die zur Decklage 1 hin bzw. zur Schall- und Wärmequelle hin vorstehen.

Fig. 5 bis 7 verdeutlichen dementsprechende praktische Ausführungsformen. Wie der Vergleich der Fig. 5 und 6 zeigt, ist die Strukturlage 3 entsprechend der Prinzipskizze von Fig. 4 in der Weise verformt, dass in einem einzigen Herstellungsschritt bei der Bildung der Erstperforation mit den Löchern 7 in der Strukturlage 3 die Vertiefungen 13 und bei der Bildung der zweiten Perforation mit den Löchern 11 die Vertiefungen 9 erzeugt werden. Wie aus Fig. 6 und 7 erkennbar, ergeben sich beim Durchstoßen der Löcher 7 und 11 gezackte Lochränder als Endränder der Vertiefungen 9 und 13, die eine zusätzliche Mikrostruktur beidseits der Strukturlage 3 darstellen. Wie ebenfalls aus Fig. 6 und 7 ersichtlich ist, sind beim Durchstoßen der Strukturlage 3 von der der Decklage 1 zugewandten Seite her Auswölbungen 15 gebildet, in deren Gipfelbereich sich jeweils die Vertiefungen 9 mit den Löchern 11 befinden. Durch diese Konfiguration ergeben sich an der der Schall- und Wärmequelle zugewandten Seite der Strukturlage 3 zwischen den Löchern 11 verlaufende, rippenartige vorstehende Flächenabschnitte in Form langgestreckter Wellenberge 17, die eine Strukturverstärkung, beispielsweise gegen Vibrationsbelastungen, bilden.

In Fig. 6 und 7 ist die der Decklage 1 zugewandte Seite der Strukturlage 3 ohne derartige Auswölbungen gezeigt, d. h. die Vertiefungen 13 mit den Löchern 11 schließen sich unmittelbar an die Hauptebene der Strukturlage 3 an. Diese Seite der Strukturlage 3 könnte jedoch ebenfalls mit Auswölbungen, die den Auswölbungen 15 entsprechen, versehen sein, so dass auch an dieser Seite der Strukturlage 3 zwischen den Vertiefungen 7 rippenartig vorstehende Flächenabschnitte, entsprechend den Wellenbergen 17 gebildet würden. Bei einer nicht näher dargestellten Ausführungsform können die freien Enden der Vertiefungen 13 auch die Decklage 1 berühren, um dergestalt eine unmittelbare Ableitung von Schall und Wärme vorzunehmen. Auch kann wiederum in die Decklage 1 eine nicht näher dargestellte Perforation oder Lochung eingebracht sein. Die herzustellenden Vertiefungen können in sich geschlossene Wandabschnitte aufweisen, wie insbesondere in den Fig. 6 und 7 dargestellt; es besteht aber auch die Möglichkeit, den jeweiligen Umfassungsrand der Vertiefung 7 in Segmente zu unterteilen, die mit ihrem freien Rand umgebogen (vgl. Fig. 4) zu einer zakkenförmigen oder zungenförmigen Anordnung führen, wie diese beispielhaft in der EP 0 806 555 A1 der Anmelderin aufgezeigt sind.

Bei dem in Fig. 7 gezeigten Ausführungsbeispiel befindet sich in dem Zwischenraum zwischen Strukturlage 3 und Decklage 1 eine zusätzliche Dämmlage 19 aus einem hochtemperaturfesten Isoliermaterial, das die akustische und thermische Dämmwirkung verbessert.

Wie insbesondere aus Fig. 5 zu ersehen ist, sind erste Perforation mit den Löchern 7 und zweite Perforation mit den Löchern 11 in einem Muster angeordnet, bei dem entlang gerader Linien, die zueinander in rechtem Winkel stehen und in Fig. 5 mit 21 bzw. mit 23 bezeichnet sind, die erste und die zweite Perforation miteinander abwechselnd und mit jeweils gleichen Abständen voneinander angeordnet sind. Die Strukturlage 3 bildet somit ein regelmäßiges Strukturmuster, bei dem die rippenartigen Flächenabschnitte, welche die Wellenberge 17 bilden, quadratische Flächenbereiche an der Strukturlage 3 umgrenzen.

Fig. 5 zeigt das Strukturierungsmuster gegenüber einer praktischen Ausführungsform in etwa 6-facher Vergrößerung. Bei einem hinsichtlich der akustischen Dämmwirkung vorteilhaften Beispiel kann der Lochdurchmesser der Perforationen im Bereich von einem Millimeter liegen, wobei die Abstände zwischen benachbarten Löchern 7 und 11 etwa 5 mm betragen können.

In den Fig. sind Decklage 1 und Strukturlage 3 im großen Ganzen ebenflächig dargestellt. Jedoch kann an der Strukturlage 3 auch eine großflächig wellenartige Wölbung vorgesehen sein, wobei Dimensionierung und Wellenform so gewählt sein können, dass sich bei betreffenden Schallfrequenzen eine zusätzliche Verbesserung der akustischen Dämmwirkung ergibt.

## Patentansprüche

1. Strukturbauteil, insbesondere Hitzeschild, bestehend aus mindestens zwei Lagen (1, 3), die miteinander verbindbar sind und von denen eine als Decklage (1) und zumindest eine als Strukturlage (3) ausgebildet sind, wobei die zumindest eine Strukturlage (3) als erste Struktur eine Perforation (7, 13) aufweist, die von der zu der Decklage (1) entgegengesetzten Seite der Strukturlage (3) her eingebracht ist, wobei in der die Perforation (7, 13) aufweisenden Strukturlage (3) mindestens eine weitere Struktur (9, 11) angeordnet ist, die auf der zu der Decklage (1) entgegengesetzten Seite vorsteht, **dadurch gekennzeichnet, dass** die Perforation (7,13) als erste Struktur der Strukturlage (3) in die Umgebung mündet und dass die weitere Struktur (9,11) der Strukturlage (3) an jeder Stelle eingriffsfrei von der Decklage (1) übergriffen ist.

2. Strukturbauteil nach Anspruch 1, **dadurch gekennzeichnet, dass** zumindest teilweise zwischen zwei benachbarten weiteren Strukturen (9,11) sich vorstehende Wandabschnitte in der Art von rippenartig ausgewölbten Flächenabschnitten (17) erstrecken.

3. Strukturbauteil nach Anspruch 1 oder 2, **dadurch gekennzeichnet, dass** die jeweiligen Flächenabschnitte (17) mit gleicher Wölbungshöhe die weiteren Strukturen (9,11) auf ihrer Oberseite tragen.

4. Strukturbauteil nach einem der Ansprüche 1 bis 3, **dadurch gekennzeichnet, dass** die jeweiligen Flächenabschnitte (17) ein regelmäßiges, vorzugsweise quadratisches Aussteifungsmuster bilden.

5. Strukturbauteil nach einem der Ansprüche 1 bis 4, **dadurch gekennzeichnet, dass** das Aussteifungsmuster regelmäßige Vierecke bildet, bei denen der jeweilige Eckpunkt aus einer weiteren Struktur (9,11) gebildet ist, und dass zumindest teilweise jedes Viereck die erste Struktur (7,13) umfaßt.

6. Strukturbauteil nach Anspruch 5, **dadurch gekennzeichnet, dass** die erste Struktur mit der jeweils ersten Perforation (7,13) mittig in dem zuordenbaren Viereck an rippenartigen Flächenabschnitten (17) angeordnet ist.

7. Strukturbauteil nach einem der Ansprüche 1 bis 6, **dadurch gekennzeichnet, dass** erste (7, 13) und zweite Perforation (9, 11) in einem Muster angeordnet sind, bei dem entlang gerader Linien (21, 23), welche zueinander im rechten Winkel stehen, erste Perforation (7, 13) und zweite Perforation (9, 11) miteinander abwechselnd und mit jeweils gleichen Abständen voneinander angeordnet sind.

8. Strukturbauteil nach einem der Ansprüche 1 bis 7, **dadurch gekennzeichnet, dass** die weitere Struktur aus jeweils einer Vertiefung (9) gebildet ist.

9. Strukturbauteil nach Anspruch 8, **dadurch gekennzeichnet, dass** die Vertiefung (9) ein geschlossenes Bodenteil aufweist oder, vergleichbar der ersten Struktur (7,13), aus einer zweiten Perforation (9,11) gebildet ist.

10. Strukturbauteil nach Anspruch 9, **dadurch gekennzeichnet, dass** die zweite Perforation (9,11), wie auch die erste Perforation (7,13), mit ihren über die Ebene der Strukturlage (3) vorstehenden Wandteilen (9,13) die jeweilige Vertiefung bildet.

11. Strukturbauteil nach einem der Ansprüche 1 bis 10, **dadurch gekennzeichnet, dass** die Strukturlage (3) als weitere Struktur eine großflächige wellenartige Wölbung besitzt.

12. Strukturbauteil nach einem der Ansprüche 1 bis 11, **dadurch gekennzeichnet, dass** die Decklage (1) eine randseitige Umbördelung (5) der Strukturlage (3) bildet.

13. Strukturbauteil nach einem der Ansprüche 1 bis 12, **dadurch gekennzeichnet, dass** zwischen der metallischen Decklage (1) und der metallischen Strukturlage (3) eine Dämm- und/oder Isolierlage (19) angeordnet ist.

## Claims

1. A structural component, in particular a heat shield, comprising at least two layers (1, 3) which can be connected to one another and one of which is in the form of a covering layer (1) and at least one of which is in the form of a structural layer (3), the at least one structural layer (3) having as a first structure a perforation (7, 13) which is introduced from the side of the structural layer (3) opposite the covering layer (1), disposed in the structural layer (3) having the perforation (7, 13) there being at least one further structure (9, 11) which protrudes on the side opposite the covering layer (1), **characterised in that** as the first structure of the structural layer (3) the perforation (7, 13) opens out into the surroundings and that the further structure (9, 11) of the structural layer (3) is overlapped without contact at all points by the covering layer (1).

2. The structural component according to Claim 1, **characterised in that** protruding wall sections extend at least partially between two adjacent further structures (9, 11) in the manner of rib-like outwardly curving surface sections (17).

3. The structural component according to Claim 1 or 2, **characterised in that** the respective surface sections (17) with the same curvature height support the further structures (9, 11) on their upper side.

4. The structural component according to any of Claims 1 to 3, **characterised in that** the respective surface sections (17) form a regular, preferably quadratic reinforcement pattern.

5. The structural component according to any of Claims 1 to 4, **characterised in that** the reinforcement pattern forms regular squares with which the respective corner point is formed from a further structure (9, 11), and that each square at least partially incorporates the first structure (7, 13).

6. The structural component according to Claim 5, **characterised in that** the first structure with the respective first perforation (7, 13) is disposed centrally within the assignable square on rib-like surface sections (17).

7. The structural component according to any of Claims 1 to 6, **characterised in that** the first (7, 13) and second perforations (9, 11) are arranged in a pattern with which the first perforation (7, 13) and the second perforation (9, 11) are arranged alternately to one another and spaced evenly apart from one another along straight lines (21, 23) which are at right angles in relation to one another.

8. The structural component according to any of Claims 1 to 7, **characterised in that** the further structure is formed from a respective indentation (9).

9. The structural component according to Claim 8, **characterised in that** the indentation (9) has a closed base part or, comparably to the first structure (7, 13), is formed from a second perforation (9, 11).

10. The structural component according to Claim 9, **characterised in that** the second perforation (9, 11), like the first perforation (7, 13), forms the respective indentation with its wall parts (9, 13) protruding over the plane of the structural layer (3).

11. The structural component according to any of Claims 1 to 10, **characterised in that** the structural layer (3) has a large-scale wave-like curvature as a further structure.

12. The structural component according to any of Claims 1 to 11, **characterised in that** the covering layer (1) forms a beading (5) of the structural layer (3) on the edge side.

13. The structural component according to any of Claims 1 to 12, **characterised in that** an insulating and/or isolating layer (19) is disposed between the metallic covering layer (1) and the metallic structural layer (3).

## Revendications

1. Elément de structure, notamment bouclier thermique, constitué d'au moins deux couches (1, 3), qui peuvent être reliées l'une à l'autre, et parmi lesquelles l'une est constituée en couche (1) de couverture et au moins une autre en couche (3) de structure, la au moins une couche (3) de structure ayant comme première structure une perforation (7, 13), qui est ménagée à partir du côté de la couche (3) de structure opposée à la couche (1) de couverture, dans lequel, dans la couche (3) de structure ayant la perforation (7, 13), est disposée au moins une autre structure (9, 11), qui dépasse du côté opposé à la couche (1) de structure, **caractérisé en ce que** la perforation (7, 13) débouche en tant que première structure de la couche (3) de structure à l'extérieur et **en ce que** l'autre structure (9, 11) de la couche (3) de structure est empiétée en chaque point sans intervention de la couche (1) de couverture.

2. Elément de structure suivant la revendication 1, **caractérisé en ce que** des parties de paroi en saillie, au moins partiellement entre deux autres structures (9, 11) voisines, s'étendent à la façon de parties (17) de surface cintrées de type en nervure.

3. Elément de structure suivant la revendication 1 ou 2, **caractérisé en ce que** les parties (17) respectives de surface de même hauteur de cintrage portent les autres structures (9, 11) sur leur côté supérieur.

4. Elément de structure suivant l'une des revendications 1 à 3, **caractérisé en ce que** les parties (17) respectives de surface forment un modèle de rigidification régulier, de préférence carré.

5. Elément de structure suivant l'une des revendications 1 à 4, **caractérisé en ce que** le modèle de rigidification forme des parallélépipèdes réguliers, dans lesquels le sommet respectif est formé par une autre structure (9, 11), et **en ce que**, au moins en partie, chaque parallélépipède entoure la première structure (7, 13).

6. Elément de structure suivant la revendication 5, **caractérisé en ce que** la première structure ayant la première perforation (7, 13) est disposée au milieu dans le parallélépipède pouvant être associé sur des parties (17) de surface de types en nervure.

7. Elément de structure suivant l'une des revendications 1 à 6, **caractérisé en ce que** la première (7, 13) et la deuxième perforations (9, 11) sont disposées suivant un motif, dans lequel sont disposées, le long de lignes (21, 23) droites, qui sont à angle droit entre elles, une première perforation (7, 13) et une deuxième perforation (9, 11) en alternance entre elles et équidistantes entre elles.

8. Elément suivant l'une des revendications 1 à 7, **caractérisé en ce que** l'autre structure est formée respectivement d'une cavité (9).

9. Elément de structure suivant la revendication 8, **caractérisé en ce que** la cavité (9) a une partie de fond fermée où, d'une manière comparable à la première structure (7, 13), est formée d'une deuxième perforation (9, 11).

10. Elément suivant la revendication 9, **caractérisé en ce que** la deuxième perforation (9, 11), tout comme aussi la première perforation (7, 13), forme la cavité respective par leurs parties (9, 13) de paroi dépassant du plan de la couche (3) de structure.

11. Elément suivant l'une des revendications 1 à 10, **caractérisé en ce que** la couche (3) de structure a comme autre structure un cintrage de grande surface à la manière d'une ondulation.

12. Elément suivant l'une des revendications 1 à 11, **caractérisé en ce que** la couche (1) de couverture forme un bord (5) rabattu du côté du bord de la couche (3) de structure.

13. Elément suivant l'une des revendications 1 à 12, **caractérisé en ce qu'**une couche (19) de barrage et/ou isolante est interposée entre la couche (1) métallique de couverture et la couche (3) métallique de structure.
